# EUROPÄISCHE PATENTSCHRIFT

(11) **EP 1 222 108 B1**
(45) Veröffentlichungstag und Bekanntmachung des Hinweises auf die Patenterteilung: **19.03.2008**
(21) Anmeldenummer: 00949353.7
(22) Anmeldetag: 15.07.2000
(51) Int. Cl.: B63B 35/44, F03D 11/04, B63B 22/02

(54) **LANDUNGSBRÜCKE**
LANDING STAGE
PONT DE DEBARQUEMENT

(30) Priorität: 30.09.1999 DE 19946899
(43) Veröffentlichungstag der Anmeldung: 17.07.2002
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2000/006765
(87) Internationale Veröffentlichungsnummer: WO 2001/023253

(56) Entgegenhaltungen:
- BE-A- 876 855
- GB-A- 2 105 392
- US-A- 4 721 412
- PATENT ABSTRACTS OF JAPAN vol. 015, no. 491 (M-1190), 12. Dezember 1991 (1991-12-12) & JP 03 213492 A (KANTO AUTO WORKS LTD), 18. September 1991 (1991-09-18)

## Beschreibung

Die vorliegende Erfindung betrifft eine Landungsbrücke, insbesondere für Offshore-Windkraftanlagen nach Anspruch 1.

Offshore-Windkraftanlagen benötigen üblicherweise einen Landungssteg oder eine Landungsbrücke, damit Fahrzeuge, insbesondere Schiffe, einen Versorgungs- und Transportverkehr gewährleisten können. Bei kleinen Offshore-Anlagen sind dies üblicherweise einfache Stege mit Möglichkeiten zum Festmachen von Booten. Bei größeren Offshore-Anlagen, an denen größere Versorgungsschiffe anlanden, sind die Landungsanlagen von aufwendigerer Konstruktion und weisen z.B. Versorgungszwischenlager wie Treibstofftanks und Verladevorrichtungen wie Kräne auf.

Hubschrauber werden wegen ihrer geringeren Zuladungskapazität üblicherweise für den schnellen Transport von Personal eingesetzt.

Wenn wegen hoher Windgeschwindigkeiten und starkem Seegang das Anlanden von Schiffen bis zur Unmöglichkeit erschwert ist, stellen Hubschrauber zeitweilig die einzige Versorgungs- und Transportmöglichkeit dar. Viele Offshore-Anlagen, die keinen Landeplatz für Hubschrauber aufweisen, können unter solchen Witterungsbedingungen mit dem Hubschrauber dann nur so versorgt werden, dass der angeflogene Hubschrauber in der Luft stehen bleibt und die Versorgung oder Inspektion z.B. mit Hilfe einer Seilwinde des Hubschraubers stattfindet. Derartige Manöver sind schwierig und gefährlich.

Offshore-Windparks aus einer Vielzahl von einzeln in der See stehenden Windkraftanlagen, aber auch andere, z.B. kleine, einzelne Offshore-Anlagen, bieten wegen ihrer Bauart kaum Möglichkeit, einen Landeplatz für Hubschrauber auf ihnen anzubringen. Bei Windkraftanlagen stellt außerdem die Gefährdung des anfliegenden Hubschraubers durch die rotierenden Rotorblätter der Windkraftanlage ein zusätzliches wesentliches Problem dar.

Die von Offshore-Bohrinseln bekannterweise getrennte Anordnung der Anlegestelle für Schiffe an den gründenden Stützen und des Landeplatzes für den Hubschrauber oben auf der Bohrinsel verbietet sich wegen des dort angeordneten Rotor bei Windkraftanlagen im wesentlichen und führt unter der beengten räumlichen Situation auf Offshore-Anlagen wegen getrennt erforderlicher Logistik und ihrem jeweils erforderlichen Platzbedarf zu nachteiliger Verschwendung von Bauraum.

Aus US-A 4,721,412 ist eine Öl-Offshore-Plattform bekannt, bei welcher eine separate Zuwegung sowie eine Fluchtplattform beschrieben ist. Auf der separaten Zuwegung können Hubschrauber landen. Eine ähnliche Anordnung ist auch aus GB-A-2105392 bekannt. Dort ist insbesondere der Zugang zur Öl-Plattform über U-Boote beschrieben.

Aus BE-A- 876855 ist eine Schwimmvorrichtung bekannt, welche auch Windenergieanlagen tragen kann und auf der Schwimmvorrichtung selbst können Hubschrauber landen.

Aus JP-A-03213492 ist eine Hubschrauberlandeplattform bekannt, welche schwimmbar im Wasser gegründet ist und welche über einen schwenkbaren Arm mit einer Kaimauer verbunden ist.

Der vorliegenden Erfindung liegt die Aufgabe zugrunde, eine Offshore-Windenergieanlage mit einer Landungsbrücke für Schiffe und Hubschrauber zu schaffen, die einen einfachen Aufbau aufweist.

Die Aufgabe wird durch eine Offshore-Windenergieaniage mit den Merkmalen nach Anspruch 1 oder 2 gelöst. Vorteilhafte Weiterbildungen der Erfindung sind in den Unteransprüchen beschrieben.

Erfindungsgemäß weist eine Offshore-Windenergieanlage eine Landungsbrücke als Anlegestelle für Schiffe und einen Landeplatz für Hubschrauber auf. Die Landungsbrücke ist bei der Offshore-Windenergieanlage angebracht. Erfindungsgemäß gibt es dabei eine gemeinsame Wegeanbindung von der Anlegestelle und dem Landeplatz zu der Anlage. Auf diese Weise können logistische Einrichtungen erfindungsgemäß für die Anlegestelle und den Landeplatz gemeinsam nutzbar eingerichtet sein. Dies sind z.B. Gebäude, in denen gelandete Personen (zunächst) Schutz suchen können, angelandete oder zur Abholung bereitgestellte Güter zwischengelagert werden können, aber auch beieinander angeordnete Treibstofflager sowie Navigationshilfen, zu denen Signalbefeuerungen, Funkpeilsender, aber auch Lotsenräume mit Radarüberwachung zählen können. Weil insbesondere Offshore-Anlagen jeglicher Art im wesentlichen grundsätzlich in ihren räumlichen Gegebenheiten sehr eingeschränkt sind, ist eine erfindungsgemäße Konzentration von logistisch relevanten Orten (Transport-Schnittstelle für Schiffe und Hubschrauber von der Anlage zur Außenwelt) äußerst vorteilhaft. Die gemeinsame Landungsbrücke, vorzugsweise mit den gemeinsam nutzbaren logistischen Einrichtungen, konzentriert erfindungsgemäß und vorteilhaft den Transport von der Landungsbrücke über die gemeinsame Wegeanbindung zu der Anlage, wo dann von der gemeinsamen Wegeanbindung ausgehend eine Weiterverteilung logistisch einfach planbar beliebig erfolgen kann.

Die erfindungsgemäße Landungsbrücke ist an einer Offshore-Windenergieanlage angebracht, deren Generator mit einem Rotor angetrieben wird, welcher sich an der Spitze (Gondel) eines Turmes um eine horizontale Achse dreht. Dabei ist der Landeplatz für Hubschrauber, um sichere Starts und Landungen zu gewährleisten, von dem Turm vorzugsweise um mindestens ein Drittel der Länge eines Rotorblattes entfernt.

Vorzugsweise ist die Landungsbrücke eigenständig in der See gegründet, d.h. die Anlegestelle und der Landeplatz sind auf einem Fundament am Meeresgrund abgestützt oder auf der Wasseroberfläche schwimmend gelagert, und zwar einzeln oder getrennt voneinander und in dann beliebiger Kombination der Lagerungsart.

Gemäß einer anderen Ausführungsform befindet sich die Landungsbrücke seitlich von der Anlage an der vorherrschenden Leeseite der Anlage. Auf diese Weise befindet sich die Landungsbrücke vorteilhaft im Windschatten der Anlage, so dass sowohl Wind als auch Seegang sich an der Anlage brechen und nur mit geminderter Macht auf die Landungsbrücke einwirken.

Dieser Effekt ist erfindungsgemäß dadurch verstärkt, dass die Landungsbrücke vorzugsweise drehbar um die Offshore-Anlage gelagert ist und somit vom anströmenden Wind stets in die Leeseite der Anlage ausgerichtet wird. Für diese Ausführungsform der Erfindung eignet sich insbesondere die schwimmende Gründung der Landungsbrücke, die z.B. als großflächiger Ponton ausgestaltet sein kann, der über einen Steg z.B. mit dem Sockelbereich einer Offshore-Windkraftanlage verbunden sein kann und dort dann, z.B. mittels eines Läufers oder einer Ringmanschette, auf dem Umfang des Sockels gelagert ist. Diese Ausgestaltung hat bei ihrer Verwendung für Windkraftanlagen einen zusätzlichen wesentlichen Vorteil: Für einen anfliegenden Hubschrauber stellen die sich weit ausladend drehenden Rotorblätter des Generatorpropellers eine große Gefährdung dar. Wenn nun aber erfindungsgemäß die Landungsbrücke vom Wind in die Leeseite der Windkraftanlage ausgerichtet ist, ist der Luftraum über der Landungsbrücke jedenfalls außerhalb des Drehbereichs des Generator-Propellers, denn dieser ist ja seiner Funktion entsprechend quer zur Leeseite gegen den Wind ausgerichtet - mit anderen Worten: die Drehebene des Generator-Propellers steht dann bezogen auf die Windrichtung senkrecht deutlich vor dem Luftraum über der Landungsbrücke und durchschneidet den Luftraum nicht. Auußerdem kann der Hubschrauber den Landeplatz vorteilhafterweise gegen den Wind anfliegen, ohne von der Anlage behindert zu werden.

Die Ausführungsform der erfindungsgemäßen Landungsbrücke mit der schwimmenden Gründung hat zudem den Vorteil, in ihrer Höhe dem Tidenhub zu folgen, was für die Anlegestelle der Schiffe von wesentlichem Vorteil ist.

Die erfindungsgemäße Landungsbrücke ist vorzugsweise eine Konstruktion aus einer beliebigen Kombination von Stahlgerippe, -platten, Beton und/oder Holz mit entsprechendem Korrosionsschutz gegen Seewasser und übrige Umgebungseinflüsse.

Bevorzugte Ausführungsformen der Erfindung werden im folgenden mit Bezug auf die beigefügten Zeichnungen beschrieben.
- Figur 1: zeigt eine Seitenansicht einer ersten Ausführungsform der vorliegenden Erfindung,
- Figur 2: zeigt eine Seitenansicht einer zweiten Ausführungsform der vorliegenden Erfindung.

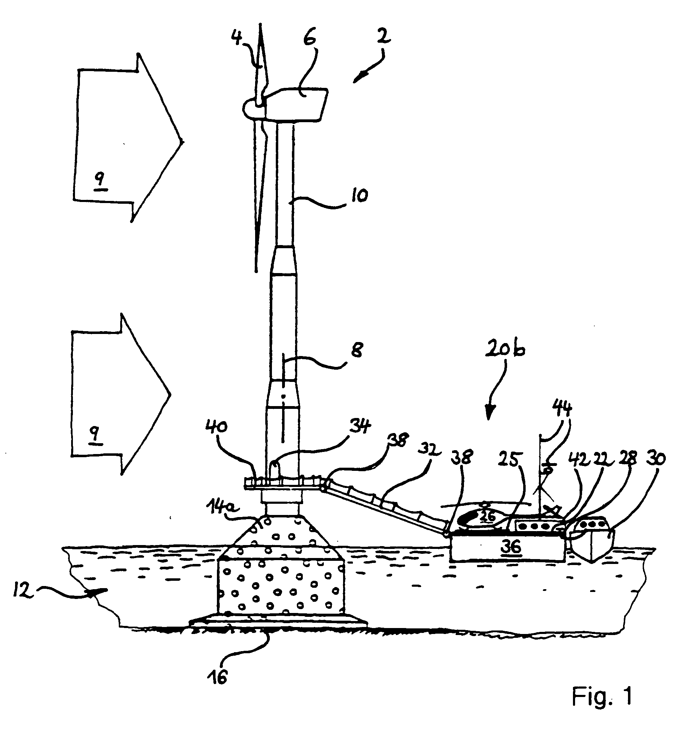

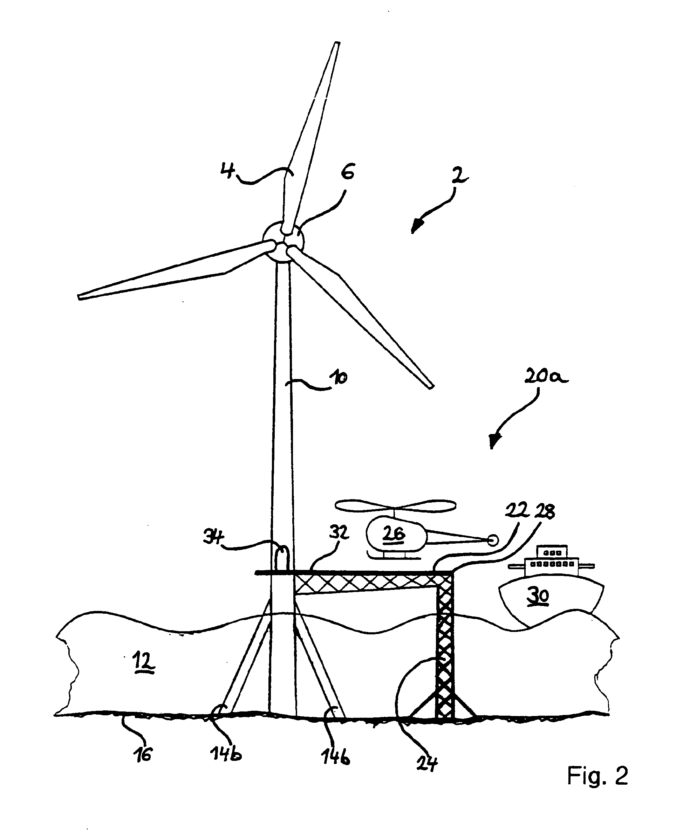

In den beiden Figuren sind gleiche oder einander irgendwie entsprechende Teile mit denselben Bezugsziffern bezeichnet. Mit Bezug auf Figur 1 und 2 ist eine Offshore-Windkraftanlage 2 mit einem Rotor 4 mit im wesentlichen waagerechter Drehachse abgebildet. Der Rotor 4 ist mit einem Generator (nicht dargestellt) in einer Gondel 6 gekoppelt bzw. verbunden. Die Gondel 6 (bzw. das gezeigte Maschinenhaus) ist durch ein ebenfalls in ihr angeordnetes Getriebe (nicht dargestellt) um eine vertikale Achse 8 bezüglich der momentanen Windrichtung 9 ausrichtbar. Um die genannte Achse 8 verdrehbar, ist die Gondel 6 mit dem Rotor 4 auf der Spitze eines Turms 10 gelagert.

Der Turm 10 der Windkraftanlage 2 ist in der See 12 gemäß Figur 1 mittels eines Fundaments 14a aus Beton und gemäß Figur 2 mittels seitlicher Verstrebungen 14b am Meeresboden 16 fest gegründet.

Die Windkraftanlagen 2 sowohl nach Figur 1 als auch nach Figur 2 weisen jeweils eine Landungsbrücke 20a, b auf. Die Landungsbrücke 20a nach Figur 2 ist als Stahlgerippekonstruktion mit einer Betonplattform 22 seitlich von der Windkraftanlage 2 fest an deren Turm 10 befestigt und über einen Stahlgerippepfeiler 24 selbst in der See 12 am Meeresboden 16 fest gegründet.

Die oberseitige horizontale Betonplattform 22 bildet einen Landeplatz 25 für einen Hubschrauber 26. Insbesondere an der am weitesten von dem Turm 10 entfernten Kante 28 der Plattform 22 bildet die Plattform 22 zusammen mit dem Pfeiler 24, der von dieser Kante 28 senkrecht abwärts zum Meeresgrund 16 ragt, eine Anlegestelle in Form eines Piers für Schiffe 30.

Sowohl der Landeplatz 25 für Hubschrauber 26 als auch die Anlegestelle 28 für Schiffe 30 ist über die am Turm 10 befestigte Plattform 22 durch eine gemeinsame Wegeanbindung 32 zwischen einerseits dem Landeplatz und der Anlegestelle 28 und andererseits dem Turm 10 der Windkraftanlage 2 verbunden. Somit nehmen Personen und Material, die mittels Hubschrauber 26 oder Schiff 30 auf der Landungsbrücke 20 umgeschlagen werden, über die gemeinsame Wegeanbindung 32 einen gemeinsamen Weg durch eine Tür 34 in den Turm 10, wo sie z.B. mittels eines Fahrstuhls (nicht dargestellt) im Turm 10 zur Gondel 6 an dessen Spitze befördert werden können, wenn dort z.B. Reparatur- oder Wartungsarbeiten vorgenommen werden müssen.

Die Landungsbrücke 20a befindet sich bezüglich einer vorherrschenden Windrichtung am Standort der Windkraftanlage 2 an deren Leeseite und ist dort, wie beschrieben, fest befestigt. Auf diese Weise ist die Gewalt von Wind und Seegang sowohl gegen den Landeplatz 25 als auch gegen die Anlegestelle 28 durch den Turm 10 gebrochen, wenn Wind aus der vorherrschenden Windrichtung weht.

Sichere Starts und Landungen von Hubschraubern 26 auf dem Landeplatz 25 sind durch einen genügend großen Vertikalabstand zwischen dem Landeplatz 25 und dem von den Enden der Rotorblätter 4 beschriebenen Durchmesser gewährleistet.

Mit Bezug auf Figur 1 nun weist die Windkraftanlage 2 eine Landungsbrücke 20b auf, die sich von der Landungsbrücke 20a in Figur 2 durch die im folgenden beschriebenen Merkmale unterscheidet.

Die Landungsbrücke 20b gemäß Figur 1 ist eine Stahlblech/Stahlgerippe-Konstruktion, deren Betonplattform 22 auf einem Ponton 36 lagert. Im Innenraum des Pontons 36 befinden sich Lagerräume (nicht dargestellt). Die Plattform 22, deren Oberseite, wie schon zur Figur 2 beschrieben, den Landeplatz 25 für Hubschrauber 26 und deren seitliche Kanten die Anlegestelle 28 für Schiffe 30 bildet, ist also nicht am Meeresboden 16 fest in der See gegründet, sondern schwimmt auf der Oberfläche der See 12. Dadurch ergibt sich zwischen der Plattform 22 und dem Meeresspiegel der See 12 stets ein gleicher Vertikalabstand, was insbesondere für das Be- und Entladen von Schiffen 30 von wesentlichem Vorteil ist.

Die Plattform 22 mit dem Landeplatz 25 und der Anlegestelle 28 auf dem schwimmenden Ponton 36 ist über einen Steg 32 mit dem Turm 10 der Windkraftanlage 2 verbunden. Der Steg 32 bildet somit die gemeinsame Wegeanbindung von dem Landeplatz 25 und der Anlegestelle 28 zum Turm 10 der Windkraftanlage 2. Der Steg 32 ist sowohl an dem Ponton 36 als auch dem Turm 10 zunächst um jeweils eine horizontale Achse schwenkbar gelagert. Durch diese Lagerstellen 38 ist gewährleistet, daß die Hubbewegung des schwimmenden Pontons 36 aufgrund von Tidenhub in der See 12 frei ermöglicht ist.

Die Landungsbrücke 20b nach Figur 1 ist über den Steg 32 außerdem um die vertikale Achse 8 des Turms 10 der Windkraftanlage 2 drehbar gelagert. Dadurch kann die Landungsbrücke 20b, über den Steg 32 mit dem Turm 10 verbunden, auf bestimmten Abstand frei um den Turm 10 herumschwimmen. Sie wird dabei durch die momentane Windrichtung 10 ausgerichtet. Dies bewirkt erstens, daß sich die Landungsbrücke 20b stets - also nicht nur bei der vorherrschenden, sondern bei jeder momentanen Windrichtung - an der Leeseite der Windkraftanlage 2 befindet und somit stets im Schutz des Turmes 10 vor den Einflüssen von Wind und Seegang steht. Um den Ponton 36 möglichst ruhig auf der See 12 schwimmen zu lassen, sind konstruktive Maßnahmen bekannt, z.B. sollte der Ponton 36 möglichst großflächig und schwer ausgebildet sein. Ein zweiter Vorteil der vom Wind 10 bewirkten Ausrichtung der Landungsbrücke 20b nach Lee der Windkraftanlage 2 betrifft die Flugsicherheit bei Starts und Landungen von Hubschraubern 26 auf der Landungsbrücke 20b: dadurch, daß der Propeller 4 der Windkraftanlage 2 stets in Windrichtung 9 ausgerichtet ist, wird der Luftraum über der nach Lee ausgerichteten Landungsbrücke 20b gemäß Figur 1 von den Rotorblättern 4 der Windkraftanlage 2 keinesfalls durchschnitten. Der Hubschrauber 26 kann somit ungehindert senkrecht starten und landen und die Landungsbrücke 20b ohne Behinderung durch die Windkraftanlage 2 gegen den Wind anfliegen.

Die beschriebene drehbare Lagerung der Landungsbrücke 20b um den Turm 10 ist durch einen ringförmigen "Balkon" 40 ausgebildet, welcher als Manschette um einen Bereich am unteren Ende des Turms 10 drehbar ist. Der Balkon 40 ist am Turm 10 in vertikaler Richtung festgelegt, so daß die Tür 34 im Turm 10 von dem Balkon 40 jedenfalls stets zugänglich ist.

Auf der Landungsbrücke 20b sind gemeinsam von dem Landeplatz 25 und der Anlegestelle 28 nutzbare Gebäude 42 und Navigationshilfen 44 erkennbar.

## Patentansprüche

1. Offshore-Windenergieanlage mit einer Landungsbrücke als Anlegestelle (28) für Schiffe sowie als Landeplatz (25) für Hubschrauber (26) und einer gemeinsamen Wegeanbindung (32) von der Anlegestelle (28) und dem Landeplatz (25) zur Windenergieanlage,
wobei die Landungsbrücke in der See schwimmend gegründet ist und um die Windenergieanlage (2) drehbar ist,
wobei die Landungsbrücke mit einer oberseitigen Plattform (22) versehen ist, auf der der Landeplatz (25) und an deren Kante die Anlegestelle (28) angeordnet ist.

2. Offshore-Windenergieanlage nach Anspruch 1, mit logistischen und/oder infrastrukturellen Einrichtungen (42, 44), welche an der Anlegestelle (28) und dem Landeplatz (25) gemeinsam nutzbar sind.

3. Offshore-Windenergieanlage nach Anspruch 2,
wobei die Einrichtungen gemeinsam nutzbare Gebäude (42) sind zur Lagerung, Zwischenlagerung, Bereitstellung von Gütern, die an der Anlegestelle (28) und/oder dem Landeplatz (25) umgeschlagen werden und/oder Gebäude (42) für Mittel, die zur Versorgung und/oder zum Betrieb der an der Landungsbrücke (20) verkehrenden Fahrzeuge (26, 30) dienen und/oder Gebäude (42) zum Aufenthalt, für schutzsuchende und/oder wartende Personen, die mit den Fahrzeugen (26, für schutzsuchende und/oder wartende Personen, die mit den Fahrzeugen (26, 30) verkehren und/oder für den Verkehr der Fahrzeuge (26, 30), z. B. als Lotsen, eingesetzt sind.

4. Offshore-Windenergieanlage nach Anspruch 2 oder 3,
wobei die Einrichtungen gemeinsam nutzbare Navigationshilfen (44), insbesondere Funkpeilsender, Lichtsignalanlagen und/oder Radare, sind.

5. Offshore-Windenergieanlage nach einem der vorhergehenden Ansprüche,
**dadurch gekennzeichnet, dass** die Landungsbrücke mit einer oberseitigen Plattform (22) aus Beton, auf der der Landeplatz (25) und an deren Kante die Anlegestelle (28) angeordnet ist, versehen ist.

6. Offshore-Windenergieanlage nach einem der vorhergehenden Ansprüche,
**dadurch gekennzeichnet, dass** die Landungsbrücke mit einer Stahlgerippe- und/oder Stahlblechkonstruktion versehen ist.

7. Offshore-Windenergieanlage nach Anspruch 6,
wobei der Landeplatz (25) von dem Turm (10) der Windkraftanlage (2) horizontal um mindestens 2/3 der Länge eines Rotorblattes (4) entfernt ist.

8. Verfahren zur Anordnung einer Offshore-Windenergieanlage mit einer Landungsbrücke als Anlegestelle (28) für Schiffe sowie als Landeplatz (25) für Hubschrauber (26) und einer gemeinsamen Wegeanbindung (32) von der Anlegestelle (28) und dem Landeplatz (25) zur Windenergieanlage,
wobei die Landungsbrücke mit einer oberseitigen Plattform (22) versehen ist, auf der der Landeplatz (25) und an deren Kante die Anlegestelle (28) angeordnet ist,
wobei die Landungsbrücke (20a, b) bezüglich einer vorherrschenden Windrichtung am Standort der Windenergieanlage (2) an der Leeseite der Windenergieanlage (2) angeordnet wird.

## Claims

1. Offshore wind power installation having a landing stage as a mooring (28) for ships and as a landing place (25) for helicopters (26) and having a common access link (32) from the mooring (28) and the landing place (25) to the wind power installation,
wherein the landing stage has a foundation such that it floats in the sea and the landing stage can be rotated about the wind power installation (2),
wherein the landing stage is provided with a top-surface platform (22) on which the landing place (25) and, at the edge thereof, the mooring (28) are arranged.

2. Offshore wind power installation according to claim 1, having logistical and/or infrastructural facilities (42, 44) which are jointly usable at the mooring (28) and the landing place (25).

3. Offshore wind power installation according to claim 2,
wherein the facilities are jointly usable buildings (42) for the storage, interim storage, provision of goods which are loaded and unloaded at the mooring (28) and/or the landing place (25), and/or buildings (42) for means serving for the provisioning and/or operation of the craft (26, 30) visiting the landing stage (20), and/or buildings (42) for shelter, for persons taking refuge and/or waiting who travel with the craft (26, 30) and/or who are used for traffic movement of the craft (26, 30), for example as maritime pilots.

4. Offshore wind power installation according to claim 2 or 3,
wherein the facilities are jointly usable navigation aids (44), especially radio position-finding transmitters, light signal installations and/or radars.

5. Offshore wind power installation according to any one of the preceding claims, **characterised in that** the landing stage is provided with a concrete top-surface platform (22) on which the landing place (25) and, at the edge thereof, the mooring (28) are arranged.

6. Offshore wind power installation according to any one of the preceding claims, **characterised in that** the landing stage is provided with a steel framework and/or steel plate structure.

7. Offshore wind power installation according to claim 6,
wherein the landing place (25) is situated at a horizontal distance from the tower (10) of the wind power installation (2) of at least 2/3 the length of a rotor blade (4).

8. Method for arranging an offshore wind power installation having a landing stage as a mooring (28) for ships and as a landing place (25) for helicopters (26) and having a common access link (32) from the mooring (28) and the landing place (25) to the wind power installation,
wherein the landing stage is provided with a top-surface platform (22) on which the landing place (25) and, at the edge thereof, the mooring (28) are arranged, wherein the landing stage (20a, b) is arranged on the leeside of the wind power installation (2) in relation to a prevailing wind direction at the site of the wind power installation (2).

## Revendications

1. Installation d'énergie éolienne offshore comportant un pont de débarquement comme point d'accostage (28) pour bateaux et comme aire d'atterrissage (25) pour hélicoptères (26) et un chemin (32) commun allant du point d'accostage (28) et de l'aire d'atterrissage (25) à l'installation d'énergie éolienne,
dans laquelle le pont de débarquement est conçu de manière flottante en mer et peut tourner autour de l'installation d'énergie éolienne (2),
dans laquelle le pont de débarquement est équipé d'une plate-forme (22) côté supérieur sur laquelle sont disposés l'aire d'atterrissage (25) et sur son côté le point d'accostage (28).

2. Installation d'énergie éolienne offshore selon la revendication 1, présentant des installations logistiques et/ou d'infrastructure (42, 44) qui peuvent être utilisées conjointement au niveau du point d'accostage (28) et de l'aire d'atterrissage (25).

3. Installation d'énergie éolienne offshore selon la revendication 2,
dans laquelle les installations sont des bâtiments (42) utilisables conjointement pour le stockage, l'entreposage, la mise à disposition de marchandises qui sont transbordées au niveau du point d'accostage (28) et/ou de l'aire d'atterrissage (25) et/ou des bâtiments (42) destinés à des moyens servant au ravitaillement et/ou au fonctionnement des véhicules (26, 30) circulant sur le pont de débarquement (20) et/ou des bâtiments (42) de séjour destinés aux personnes cherchant à se protéger et/ou en attente, qui circulent avec les véhicules (26, 30) et/ou qui sont employées pour le déplacement des véhicules (26, 30), par exemple comme pilote.

4. Installation d'énergie éolienne offshore selon la revendication 2 ou 3,
dans laquelle les dispositifs sont des aides à la navigation (44) utilisables conjointement, en particulier des radio-émetteurs, des feux de signalisation et/ou des radars.

5. Installation d'énergie éolienne offshore selon l'une quelconque des revendications précédentes, **caractérisée en ce que** le pont de débarquement est équipé d'une plate-forme (22) côté supérieur en béton, sur laquelle sont disposés l'aire d'atterrissage (25) et sur son côté le point d'accostage (28).

6. Installation d'énergie éolienne offshore selon l'une quelconque des revendications précédentes, **caractérisée en ce que** le pont de débarquement est équipé d'une ossature métallique et/ou d'une construction en tôle d'acier.

7. Installation d'énergie éolienne offshore selon la revendication 6,
dans laquelle l'aire d'atterrissage (25) est éloignée de la tour (10) de l'installation d'énergie éolienne (2) de manière horizontale d'au moins 2/3 de la longueur d'une pale de rotor (4).

8. Procédé d'agencement d'une installation d'énergie éolienne offshore dotée d'un pont de débarquement comme point d'accostage (28) pour bateaux et comme aire d'atterrissage (25) pour hélicoptères (26) un chemin (32) commun allant du point d'accostage (28) et de l'aire d'atterrissage (25) à l'installation d'énergie éolienne,
dans lequel le pont de débarquement est équipé d'une plate-forme (22) côté supérieur sur laquelle sont disposés l'aire d'atterrissage (25) et sur son côté le point d'accostage (28), le pont de débarquement (20a, 20b) étant disposé sur la face vide de l'installation d'énergie éolienne (2) par rapport à une direction de vent prédominante sur le site de l'installation d'énergie éolienne (2).
